# EUROPÄISCHE PATENTSCHRIFT

(11) **EP 0 699 693 B1**
(45) Veröffentlichungstag und Bekanntmachung des Hinweises auf die Patenterteilung: **11.04.2001**
(21) Anmeldenummer: 95113097.0
(22) Anmeldetag: 21.08.1995
(51) Int. Cl.: C08F 283/06, C08F 290/06, C08G 18/63

(54) **Niedrigviskose, stabile, agglomeratfreie Polymerpolyole, ein Verfahren zu ihrer Herstellung und ihre Verwendung zur Herstellung von Polyurethankunststoffen**
Low viscosity, stable, non-agglomerated polymer-polyols, their preparation and use in the preparation of polyurethanes
Polyoles polymères à basse viscosité, stables et non agglomérés, leur préparation et leur utilisation dans la préparation de polyuréthanes

(30) Priorität: 02.09.1994 DE 4431226
(43) Veröffentlichungstag der Anmeldung: 06.03.1996
(73) Patentinhaber: BAYER AG, 51368 Leverkusen (DE)
(72) Erfinder: Heinemann, Torsten, Dr., D-51065 Köln (DE); Dietrich, Manfred, Dr., D-51373 Leverkusen (DE); Jacobs, Gundolf, Dr., D-51503 Rösrath (DE); Kratz, Mark, Dr., D-47800 Krefeld (DE); Sanders, Josef, Dr., D-51373 Leverkusen (DE); Scholz, Uwe, Dr., D-51065 Köln (DE); Woynar, Helmut, Dr., D-41540 Dormagen (DE)

(56) Entgegenhaltungen:
- EP-A- 0 008 444
- EP-A- 0 163 188
- WO-A-87/03886
- US-A- 3 383 351
- US-A- 3 523 093
- US-A- 4 568 705
- US-A- 4 661 531
- US-A- 4 745 153

## Beschreibung

Unter Polymerpolyolen sind im Rahmen dieser Erfindung Produkte zu verstehen, die durch Polymerisation ethylenisch ungesättigter Verbindungen in höhermolekularen Polyolen erhalten werden. Diese können z.B. zur Herstellung von Polyurethanweichschäumen verwendet werden. Hauptsächlich eingesetzte ethylenisch ungesättigte Verbindungen sind die Monomeren Styrol und Acrylnitril, die in Polyetherpolyolen radikalisch polymerisiert werden.

Die Herstellung solcher Polymerpolyole ist beispielsweise beschrieben in US-PS 3 383 351, 3 523 093 oder DE-A 2 837 026.

Die wichtigsten Ziele bei der Herstellung von Polymerpolyolen sind das Erreichen hoher Feststoffgehalte (mindestens 40 %) bei hohem (mindestens 60 Gew.-Teile der Monomeren) Styrolanteil, möglichst niedriger Viskosität bei gleichzeitiger ausgezeichneter Produktstabilität.

Um diese Produktstabilität, d.h. die Unterbindung der Bildung unerwünschter, aus der kontinuierlichen Phase, dem Polyetherpolyol, ausfallender, agglomerierter Polymerpartikel zu erreichen, müssen die Polymerteilchen während der Polymerpolyolherstellung stabilisiert werden. Diese Stabilisierung kann erreicht werden, indem als Stabilisator eine mit der Polyetherpolyolphase kompatible Verbindung, die ethylenisch ungesättigte, polymerisationsfähige Gruppen enthält, mit polymerisiert wird. Dieses sogenannte Makromonomer copolymerisiert mit den Vinylmonomeren, so daß die entstehenden Polymerteilchen durch Seitenketten sterisch stabilisiert werden und somit gegen Agglomeration und Absetzen geschützt sind.

Die Herstellung von Polymerpolyolen unter Mitverwendung von Makromonomeren ist beschrieben, z.B. in US-PS 3 850 861, US-PS 3 823 201, US-PS 4 689 354, US-PS 4 342 840: die ethylenisch ungesättigten Doppelbindungen werden in Polyetherpolyole beispielsweise eingeführt durch Umsetzung mit cyclischen, ungesättigten Säureanhydriden wie Maleinsäureanhydrid, gefolgt von der Reaktion mit Ethylenoxid (s.z.B. EP-A 163 188, US-A 4 661 531); durch Umsetzung mit einem ungesättigten Epoxid wie Allylglyciylether. JP 61 115 919 beschreibt Polymerpolyole, die unter Mitverwendung von Makromonomeren mit einer Molmasse von 700 bis 3500 g/mol, die beispielsweise durch Umsetzung von TDI, Hydroxyethylmethacrylat und einem Polyetherpolyol in äquimolarem Verhältnis erhalten werden.

US-PS 4 390 645, US-A 4 745 153 und WO 87/03886 beschreiben die Herstellung von Makromonomeren durch Reaktion von Polyalkylenoxiden mit ungesättigten, radikalisch polymerisierbaren Isocyanaten wie 2-Isocyanatoethylmethacrylat.

Auch wenn alle erwähnten Verfahren zur Polymerpolyolen führen, die grundsätzlich als Polyolkomponente von Polyurethanweichschäumen verwendet werden können, so sind weitere Verbesserungen erwünscht: einige Herstellungsmöglichkeiten für die Makromonomeren sind umständlich; die der Literatur zu entnehmenden Viskositäten sind oft relativ hoch, und es werden oft kleinere agglomerierte Polymerteilchen im Ablauf der Produkte beobachtet, d.h. die Stabilität der Produkte ist, wie den Vergleichsbeispielen zu entnehmen ist, nicht ausreichend.

Es war daher die der Erfindung zugrunde liegende Aufgabe, ein Verfahren zur Herstellung niedrigviskoser, stabiler, agglomeratfreier Polymerpolyole zur Verfügung zu stellen.

Diese Aufgabe konnte mit der nachstehend näher beschriebenen Erfindung gelöst werden.

Gegenstand der Erfindung ist ein Verfahren zur Herstellung stabiler, agglomeratfreier, niedrigviskoser Pfropfcopolymer-Dispersionen durch radikalische Polymerisation von 25 bis 65 Gew.-% ethylenisch ungesättigter Monomerer in einem "Basispolyol", dadurch gekennzeichnet, daß die Polymerisation in Gegenwart eines Polyols mit ethylenisch ungesättigten Endgruppen, einem niedermolekularem Regler und gegebenenfalls einem organischen Lösungsmittel durchgeführt wird, wobei das Polyol mit ethylenisch ungesättigten Endgruppen eine Molmasse von 4700 bis 15000 g/mol, eine Funktionalität von 2 bis 6, und 0,1 bis 1 Mol Doppelbindung pro Mol Polyol aufweist und weiterhin dadurch charakterisiert ist, dass die ethylenisch ungesättigten Gruppen durch Reaktion mit einem Isocyanat eingeführt worden sind, wobei das Isocyanat durch Umsetzung von ethylenisch ungesättigten niedermolekularen Monohydroxyacrylaten mit Polyisocyanaten erhalten worden ist
und
als Basispolyol ein mindestens zwei Hydroxylgruppen aufweisendes Polyalkylenoxid mit einer Funktionalität von 2,5 bis 6 und einer OH-Zahl von 20 bis 100 verwendet wird.

Erfindungsgemäß ist bevorzugt, daß
- als ethylenisch ungesättigte Monomere Styrol und/oder Acrylnitril verwendet werden,
- als ethylenisch ungesättigte Monomere Mischungen aus Styrol und Acrylnitril im Gew.-Verhältnis von 20:80 bis 80:20, vorzugsweise von 70:30 bis 70:50 verwendet werden,
- als niedermolekularer Regler Methanol, Ethanol oder Isopropanol verwendet wird.

Die Erfindung betrifft auch stabile, agglomeratfreie, niedrigviskose Pfropfcopolymer-Dispersionen, erhältlich nach dem erfindungsgemäßen Verfahren und die Verwendung der erfindungsgemäß erhältlichen Pfropfcopolymer-Dispersionen als Polyolkomponente bei der Herstellung von Polyurethankunststoffen nach dem Isocyanat-Polyadditionsverfahren.

Die als "Basispolyole" verwendeten mindestens zwei Hydroxylgruppen aufweisenden Polyole sind vorzugsweise Polyetherpolyole, z.B. die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die als "Basispolyol" verwendeten Polyetherpolyole haben Funktionalitäten von 2,5 bis 6 und eine OH-Zahl von 20 bis 100. Die Polyetherketten sind bevorzugt aus Propylenoxid- und Ethylenoxideinheiten aufgebaut. Als "Basispolyole" kommen aber auch grundsätzlich Polyesterpolyole mit Funktionalitäten von vorzugsweise 2,5 bis 6 und einer OH-Zahl 20 bis 100 in Frage.

Die Polymerpolyole werden durch radikalische Polymerisation ethylenisch ungesättigter Monomerer oder Mischungen ethylenisch ungesättigter Monomere in den beschriebenen Polyetherpolyolen erhalten. Beispiele für derartige Monomere sind Butadien, Styrol, α-Methylstyrol, Methylstyrol, Ethylstyrol, Acrylnitril, Methacrylnitril, Methylmethacrylat, Acrylsäureester. Bevorzugt werden Styrol und Acrylnitril verwendet. Die Menge an ethylenisch ungesättigten Monomeren beträgt 25 bis 65 Gew.-%, bezogen auf die Gesamtmenge an fertigem Produkt. Bei der Verwendung von Styrol und Acrylnitril ist das Verhältnis dieser beiden Monomeren vorzugsweise 20:80 bis 80:20, insbesondere 70:30 bis 30:70 Gewichtsteile.

Die Initiierung der radikalischen Polymerisation erfolgt mit üblichen radikalbildenden Initiatoren. Beispiele für derartige Initiatoren sind organische Peroxide wie Benzoylperoxid, tert.-Butyloctoat, Didecanoylperoxid; Azoverbindungen wie Azoisobutyronitril oder 2,2'-Azobis(2-methylbutyronitril).

Die als Ausgangsmaterial für das Polyol mit ethylenisch ungesättigten Gruppen verwendeten Polyole sind ebenfalls vorzugsweise Polyetherpolyole wie die an sich bekannten Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine. Die als Ausgangsmaterial für das Polyol mit ethylenisch ungesättigten Gruppen dienenden Polyetherpolyole haben Funktionalitäten von 2 bis 6 und eine Molmasse von 4500 bis 15000 g/mol. Die Polyetherketten sind bevorzugt aus Propylenoxid- und Ethylenoxideinheiten aufgebaut.

Die ethylenisch ungesättigten Gruppen werden eingeführt, indem Hydroxyendgruppen des Polyetherpolyols in an sich bekannter Weise mit einem Isocyanat umgesetzt werden, das durch Reaktion eines Polyisocyanates mit einem ethylenisch ungesättigten, niedermolekularem Monohydroxyacrylat erhalten wird. Als Polyisocyanat können beispielsweise eingesetzt werden Toluylendiisocyanat, Hexamethylendiisocyanat, Diphenylmethandiisocyanat, Isophorondiisocyanat, Naphthalindiisocyanat.

Als niedermolekulare Monohydroxyacrylate können verwendet werden Hydroxyethylacrylat, Hydroxypropylacrylat, Hydroxyethylmethacrylat, Hydroxybutylacrylat.

Die Polyole mit ethylenisch ungesättigten Endgruppen enthalten 0,1 bis 1 Mol Doppelbindung pro Mol Polyol.

Als niedermolekulare Regler werden insbesondere Alkohole wie Methanol, Ethanol, Isopropanol, Butanole, Butandiol, Mercaptane, Allylverbindungen, Enolether sie (Cyclohex-3-enylidenmethoxymethyl)benzol verwendet.

Als gegebenenfalls einzusetzende Lösungsmittel können Kohlenwasserstoffe wie Toluol, Ethylbenzol, Isopropylbenzol, Xylole oder Ketone wie Aceton, Methylethylketon verwendet werden; bevorzugt werden Toluol und Ethylbenzol verwendet.

Die Durchführung des erfindungsgemäßen Verfahrens kann diskontinuierlich oder kontinuierlich erfolgen. Man kann z.B. eine Mischung, die die ethylenisch ungesättigten Monomeren, den Initiator, Lösungsmittel und gegebenenfalls einen Teil des einzusetzenden Polyethers enthält, in den mit einem Rührwerk ausgestatteten Reaktor eindosieren, der den vorerhitzten Polyether, das Polyol mit ethylenisch ungesättigten Endgruppen und den Regler enthält. Es besteht aber auch die Möglichkeit, den Regler und einen Teil des Polyols mit ethylenisch ungesättigten Gruppen zuzudosieren.

Außerdem kann eine Mischung aller Reaktionsteilnehmer kontinuierlich in einen Reaktor eindosiert und das Produkt in gleichem Maße durch einen Überlauf entnommen werden.

Die Temperatur, bei der die Polymerisation durchgeführt wird, beträgt in der Regel 80 bis 140°C, vorzugsweise 90 bis 130°C.

Nach Beendigung der Polymerisationsreaktion wird das Produkt in üblicher Weise durch Vakuumdestillation von leichtflüchtigen Anteilen wie Restmonomeren, Lösungsmittel und Reglerresten befreit.

Die nach dem erfindungsgemäßen Verfahren hergestellten Polymerpolyole sind hervorragend zur Herstellung von Polyurethankunststoffen nach dem Isocyanat-Polyadditionsverfahren geeignet. Sie sind frei von Polymeragglomeraten jeglicher Art, stabil und niedrigviskos.

Die Herstellung von Polyurethankunststoffen, vorzugsweise von weichen, flexiblen Polyurethanschäumen erfolgt durch Umsetzung von
a) organischen Polyisocyanaten mit
b) den erfindungsgemäßen Polymerpolyolen, gegebenenfalls in Gegenwart von
c) weiteren höhermolekularen und/oder niedermolekularen, gegenüber Isocyanaten reaktive Wasserstoffatome enthaltende Verbindungen,
d) Katalysatoren,
e) Wasser und/oder niedrigsiedenden Kohlenwasserstoffen als Treibmittel und
f) Hilfsmitteln und/oder Zusatzstoffen.

Als Ausgangskomponenten werden verwendet:
a) aliphatische, cycloaliphatische, araliphatische, aromatische und heterocyclische Polyisocyanate, wie sie z.B. von W. Siefgen in Justus Liebigs Annalen der Chemie, 362, Seiten 75 bis 136 beschrieben werden, beispielsweise solche der allgemeinen Formel

   Q(NCO)ₙ,

   in der
   - n: 2 bis 5, vorzugsweise 2 bis 3, und
   - Q: einen aliphatischen Kohlenwasserstoffrest mit 2 bis 18, vorzugsweise 6 bis 10 Kohlenstoffatomen, einen cycloaliphatischen Kohlenstoffrest mit 4 bis 15, vorzugsweise 5 bis 10 Kohlenstoffatomen, einen aromatischen Kohlenwasserstoffrest mit 6 bis 15, vorzugsweise 6 bis 13 Kohlenstoffatomen bedeuten, z.B. solche Polyisocyanate, wie sie in der DE-OS 2 832 253, Seiten 10 bis 11, beschrieben werden.

   Besonders bevorzugt werden in der Regel die technisch leicht zugänglichen Polyisocyanate, z.B. das 2,4- und 2,6-Toluylendiisocyanat, sowie beliebige Gemische dieser Isomeren ("TDI"), Diphenylmethandiisocyanat ("MDI") und Polyphenylpolymethylenpolyisocyanate, wie sie durch Anilin-Formaldehyd-Kondensation und anschließende Phosgenierung hergestellt werden und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate"), insbesondere solche modifizierten Polyisocyanate, die sich vom 2,4- und/oder 2,6-Toluyoendiisocyanat bzw. 4,4'- und/oder 2,4'-Diphenylmethandiisocyanat ableiten;
b) die erfindungsgemäßen Polymerpolyole,
c) gegebenenfalls als Ausgangskomponenten Verbindungen mit mindestens 2 gegenüber Isocyanaten reaktionsfähigen Wasserstoffatomen mit einem Molekulargewicht von 40 bis 10 000 g/mol, vorzugsweise Polyetherpolyole, d.h. an sich bekannte Additionsprodukte von cyclischen Ethern wie Ethylenoxid, Propylenoxid, Styroloxid, Butylenoxid an Starterverbindungen wie z.B. Polyhydroxyverbindungen wie Alkylenglykole, Glycerin, Trimethylolpropan, Pentaerythrit, Sorbit, Amine wie Ethylendiamin oder Toluylendiamine sowie die Starterverbindungen selbst;
d) erfindungsgemäß werden gegebenenfalls die in der Polyurethanchemie an sich üblichen Katalysatoren mitverwendet;
e) gegebenenfalls werden als Treibmittel Wasser und/oder niedrigsiedende Kohlenwasserstoffe mitverwendet, z.B. niedrigsiedende Alkane wie Pentan, Cycloalkane wie Cyclopentan, ferner Alkene sowie unter Druck in die Reaktionsmischung eingebracht Gase wie Kohlendioxid;
f) gegebenenfalls werden Hilfs- und Zusatzmittel mitverwendet wie
   f₁) oberflächenaktive Zusatzstoffe wie Emulgatoren und Schaumstabilisatoren,
   f₂) Reaktionsverzögerer, Zellregler der an sich bekannten Art wie Parrafine, Fettalkohole oder Dimethylpolysiloxane sowie Pigmente oder Farbstoffe und Flammschutzmittel der an sich bekannten Art, ferner Stabilisatoren gegen Alterungs- und Witterungseinflüsse, Weichmacher und fungistatisch und bakteriostatisch wirkende Substanzen.

   Beispiele von gegebenenfalls erfindungsgemäß mitzuverwendenden oberflächenaktiven Zusatzstoffen und Schaumstabilisatoren sowie Reaktionsverzögerern, Stabilisatoren, flammhemmenden Substanzen, Weichmachern, Farbstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von G. Oertel, Carl Hanser Verlag, München, 1993, z.B. auf den Seiten 104 bis 127 beschrieben.

Die Herstellung der weichen Polyurethanschäume erfolgt in an sich bekannter Weise, wie z.B. im Kunststoff-Handbuch, Band VII, herausgegeben von G. Oertel, Carl Hanser Verlag, München, 1993, z.B. auf den Seiten 139 bis 263 beschrieben.

### Beispiele

### Ausgangsprodukte:

- Polyol A:: Polypropylenoxid/ethylenoxidether der Molmasse 12020 g/mol auf Basis Sorbit
- Polyol B:: Polypropylenoxid/ethylenoxidether der Molmasse 5430 g/mol auf Basis Glycerin
- Polyol C:: Polypropylenoxid/ethylenoxidether der Molmasse 000 g/mol mit Polypropylenoxidendblöcken auf Basis Glycerin
- Polyol D:: Polypropylenoxid/ethylenoxidether der Molmasse 12020 g/mol auf Basis Sorbit
- Polyol E:: Umsetzungsprodukt Polyol D mit Maleinsäureanhydrid und nachfolgend Ethylenoxid

### Beispiel 1

Zeigt die Herstellung eines Isocyanates, das zur Einführung ethylenisch ungesättigter Doppelbindungen in Polyole verwendet wird.

Zu 88 g Toluylendiisocyanat werden bei 80°C unter Rühren langsam 65 g Acrylsäurehydroxypropylester getropft. Man erhält eine klare Flüssigkeit mit einem NCO-Gehalt von 13.7 %.

### Beispiel 2

Zeigt die Herstellung eines erfindungsgemäßen Polyols (Polyol F) mit ethylenisch ungesättigten Endgruppen.

Zu 500 g Polyether A werden bei 70°C 9,4 g des Isocyanates aus Beispiel 1 gegeben. Man erhält eine klare Flüssigkeit mit einer Viskosität von 2300 mPas/25°C.

### Beispiel 3

Zeigt die Herstellung eines erfindungsgemäßen Polyols (Polyol G) mit ethylenisch ungesättigten Endgruppen.

Zu 500 g Polyether B werden bei 70°C 20 g des Isocyanates aus Beispiel 1 gegeben. Man erhält eine Klare Flüssigkeit, in der kein freies Isocyanat mehr nachgewiesen werden kann.

### Beispiel 4

Zeigt die Herstellung eines nicht erfindungsgemäßen Polyols (Polyol H) mit ethylenisch ungesättigten Endgruppen

Zu 500 g Polyether C werden bei 70°C 37 g des Isocyanates aus Beispiel 1 gegeben. Man erhält eine klare Flüssigkeit, in der kein freies Isocyanat mehr nachgewiesen werden kann.

### Beispiel 5

Zeigt die Herstellung eines Polymerpolyols entsprechend dem erfindungsgemäßen Verfahren

Zu 164 g Polyol C, 36 g Polyol F (Beispiel 2) und 20 g Isopropanol werden bei 120°C unter Rühren innerhalb von 2 Stunden 238 g Styrol, 158 g Acrylnitril, 90 g Ethylenbenzol und 4,6 g 2,2'-Azobis(2-methylbutyronitril) dosiert. Nach 10 Minuten werden 0,4 g 2,2'-Azobis(2-methylbutyronitril) in 15 g Ethylbenzol zur Vervollständigung des Umsatzes zugegeben. Nach einer Nachreaktionszeit von einer Stunde werden Restmonomere, Reglerreste und Lösungsmittel durch Vakuumdestillation entfernt. Das Produkt läuft ohne Druck durch ein Filtertuch mit einer Maschenweite von 100 µm,

Es ist eine weiße, agglomeratfreie Dispersion mit einer Viskosität von 4400 mPas/25°C und weist einen Feststoffgehalt von 43 Gew.-% auf.

### Beispiele 6 bis 10

zeigen die Herstellung von Polymerpolyolen nach nicht erfindungsgemäßen Verfahren (Mengenangaben in g); Durchführung entsprechend Beispiel 5. Bei Einsatz eines Polyol ohne ethylenische Endgruppen (Beispiel 6), bei Verzicht auf den Regler (Beispiel 7) oder bei Einsatz eines Polyols mit ethylenisch ungesättigten Endgruppen (Beispiel 8) werden keine stabilen Produkte erhalten. Bei Verwendung eines nicht erfindungsgemäßen Polyols (Beispiele 9 und 10) werden stabile Produkte erhalten, die aber in Viskosität und Ablaufverhalten den erfindungsgemäßen unterlegen sind.

| | Beispiel 6 | Beispiel 7 | Beispiel 8 | Beispiel 9 | Beispiel 10 |
|---|---|---|---|---|---|
| Polyol A | 36 | | | | |
| Polyol C | 468 | 468 | 468 | 468 | 468 |
| Polyol E | | | | 36 | 36 |
| Polyol F | | 36 | | | |
| Polyol H | | | 36 | | |
| Styrol | 238 | 238 | 238 | 238 | 238 |
| Acrylnitril | 158 | 158 | 158 | 158 | 158 |
| Toluol | | | | | 90 |
| Ethylbenzol | 90 | 90 | 90 | 90 | |
| Isopropanol | 20 | | 20 | 20 | 30 |
| Stabilität | schlecht¹⁾ | schlecht¹⁾ | schlecht¹⁾ | gut | mittel²⁾ |
| Ablauf | - | - | - | mittel | schlecht |
| Viskosität (mPas/25°C) | - | - | - | 4800 | 4400 |

| | | | | | |
|---|---|---|---|---|---|
| ¹⁾: Schon während der Polymerisation werden Ablagerung und Bildung von festen, großen Polymerteilchen beobachtet; die Produkte können nicht über ein 100 µm Filtertuch filtriert werden. | | | | | |
| ²⁾: Es treten Filtrationsprobleme auf. Ablauf sehr gut: keinerlei Agglomeratteilchen; gut: sehr wenige Agglomeratteilchen; mittel: deutlich erkennbare Zahl von Agglomeratteilchen; schlecht: sehr viele Agglomeratteilchen | | | | | |

### Beispiele 11 bis 14

zeigen die Herstellung von Polymerpolyolen nach dem erfindungsgemäßen Verfahren; Durchführung entsprechend Beispiel 5.

Beispiel 11 zeigt, daß auch geringe Reglermengen zu guten Produkten führen, Beispiel 12 zeigt, daß ohne Lösungsmittel gearbeitet werden kann, Beispiel 13 zeigt, daß auch mit Toluol als Lösungsmittel ausgezeichnete Produkte erhalten werden, Beispiel 14 zeigt, daß die Molmasse des Stabilisators in weiten Grenzen variierbar ist.

| | Beispiel 11 | Beispiel 12 | Beispiel 13 | Beispiel 14 |
|---|---|---|---|---|
| Polyol C | 468 | 468 | 468 | 468 |
| Polyol F | 36 | 36 | 36 | |
| Polyol G | | | | 27 |
| Styrol | 238 | 238 | 238 | 238 |
| Acrylnitril | 158 | 158 | 158 | 158 |
| Toluol | | | 90 | |
| Ethylbenzol | 90 | | | |
| Isopropanol | 10 | 20 | 30 | 20 |
| Stabilität | gut | sehr gut | sehr gut | sehr gut |
| Ablauf | gut | sehr gut | sehr gut | sehr gut |
| Viskosität (mPas/25°C) | 4900 | 5000 | 4000 | 4500 |

### Beispiele 15 bis 17

### Herstellung von Weichschäumen

Alle Komponenten - außer dem Polyisocyanat - werden miteinander intensiv vermischt. Danach wird das Polyisocyanat unter Rühren hinzugegeben und die Reaktionsmischung in eine offene Form gegossen, worin sie zum Weichschaum aufschäumt.

Verschäumungsbeispiele (Mengen in Gew.-Teilen)

| | Beispiel 15 | Beispiel 16 | Beispiel 17 |
|---|---|---|---|
| Katalysator 1 | 0,15 | 0,15 | 0,15 |
| Katalysator 2 | 0,17 | 0,17 | 0,17 |
| Stabilisator | 0,8 | 0,8 | 0,8 |
| Wasser | 3,5 | 3,5 | 3,5 |
| Polymerpolyol (Beispiel 5) | 25 | | |
| Polymerpolyol (Beispiel 12) | | 25 | |
| Polymerpolyol (Beispiel 14) | | | 25 |
| Polyol I | 75 | 75 | 75 |
| Isocyanat | 43,4 | 43,4 | 43,4 |
| Kennzahl | 108 | 108 | 108 |
| Rohdichte (kg/m³) | 29 | 28 | 28 |
| Offenzelligkeit | hoch | hoch | hoch |
| Stauchhärte (kPa) | 4,8 | 4,8 | 5,0 |
| Griff | gut | gut | gut |
| Elastizität | gut | gut | gut |

| | | | |
|---|---|---|---|
| Katalysator 1: Mischung aus Dimethylethanolamin und Bis-N,N-dimethylaminoethylether | | | |
| Katalysator 2: Zinnoctoat | | | |
| Stabilisator: Polyethersiloxan der Fa. Goldschmidt, Essen | | | |
| Isocyanat: Toluylendiisocyanat (Desmodur® T80, Bayer AG) | | | |
| Polyol I: Polypropylenoxid/ethylenoxidether der Molmasse 3700 g/mol auf Basis Trimethylolpropan | | | |

## Patentansprüche

1. Verfahren zur Herstellung stabiler, agglomeratfreier, niedrigviskoser Pfropfcopolymer-Dispersionen durch radikalische Polymerisation von 25 bis 65 Gew.-% ethylenisch ungesättigter Monomerer in einem Basispolyol, dadurch gekennzeichnet, dass die Polymerisation in Gegenwart eines Polyols mit ethylenisch ungesättigten Endgruppen, einem niedermolekularen Regler und gegebenenfalls einem organischen Lösungsmittel durchgeführt wird, wobei
das Polyol mit ethylenisch ungesättigten Endgruppen eine Molmasse von 4700 bis 15000 g/mol, eine Funktionalität von 2 bis 6, und 0,1 bis 1 Mol Doppelbindung pro Mol Polyol aufweist und weiterhin dadurch charakterisiert ist, dass die ethylenisch ungesättigten Gruppen durch Reaktion mit einem Isocyanat eingeführt worden sind, wobei das Isocyanat durch Umsetzung von ethylenisch ungesättigten niedermolekularen Monohydroxyacrylaten mit Polyisocyanaten erhalten worden ist
und
als Basispolyol ein mindestens zwei Hydroxylgruppen aufweisendes Polyalkylenoxid mit einer Funktionalität von 2,5 bis 6 und einer OH-Zahl von 20 bis 100 verwendet wird.

2. Verfahren gemäß Anspruch 1, dadurch gekennzeichnet, dass als ethylenisch ungesättigte Monomere Styrol und/oder Acrylnitril verwendet werden.

3. Verfahren gemäß Anspruch 1 und 2, dadurch gekennzeichnet, dass als ethylenisch ungesättigte Monomere Mischungen aus Styrol und Acrylnitril im Gewichtsverhältnis von 20:80 bis 80:20 verwendet werden.

4. Verfahren gemäß Anspruch 1 und 2, dadurch gekennzeichnet, dass als ethylenisch ungesättigte Monomere Mischungen aus Styrol und Acrylnitril im Gewichtsverhältnis von 70:30 bis 30:70 verwendet werden.

5. Verfahren gemäß einem oder mehrerer der vorangegangenen Ansprüche, dadurch gekennzeichnet, dass als niedermolekularer Regler Methanol, Ethanol oder Isopropanol verwendet wird.

6. Stabile, agglomeratfreie, niedrigviskose Pfropfcopolymer-Dispersionen, erhältlich nach dem Verfahren gemäß einem oder mehrerer der vorangegangenen Ansprüche.

7. Verwendung der gemäß einem oder mehrerer der vorangegangenen Ansprüche erhältlichen Pfropfcopolymer-Dispersionen als Polyolkomponente bei der Herstellung von Polyurethankunststoffen nach dem Isocyanat-Polyadditionsverfahren.

## Claims

1. A process for preparing stable, agglomerate-free, low-viscosity graft copolymer dispersions by radical polymerisation of 25 to 65 wt.% of ethylenically unsaturated monomers in a base polyol, characterised in that polymerisation is performed in the presence of a polyol with ethylenically unsaturated terminal groups, a low-molecular weight regulator and optionally an organic solvent,
wherein the polyol with ethylenically unsaturated terminal groups has a molecular weight of 4700 to 15000 g/mol, a functionality of 2 to 6 and 0.1 to 1 mol of double bonds per mol of polyol and furthermore characterised in that the ethylenically unsaturated groups have been introduced by reaction with an isocyanate, wherein the isocyanate has been obtained by reacting ethylenically unsaturated low molecular weight monohydroxyacrylates with polyisocyanates
and
a polyalkylene oxide containing at least two hydroxyl groups, with a functionality of 2.5 to 6 and an OH value of 20 to 100, is used as the base polyol.

2. A process according to claim 1, characterised in that styrene and/or acrylonitrile are used as ethylenically unsaturated monomers.

3. A process according to claims 1 and 2, characterised in that mixtures of styrene and acrylonitrile in the ratio by weight of 20:80 to 80:20 are used as ethylenically unsaturated monomers.

4. A process according to claims 1 and 2, characterised in that mixtures of styrene and acrylonitrile in the ratio by weight of 70:30 to 30:70 are used as ethylenically unsaturated monomers.

5. A process according to one or more of the preceding claims, characterised in that methanol, ethanol or isopropanol is used as a low-molecular weight regulator.

6. Stable, agglomerate-free, low-viscosity graft copolymer dispersions, obtainable by the process in accordance with one or more of the preceding claims.

7. Use of the graft copolymer dispersions obtainable in accordance with one or more of the preceding claims as a polyol component in the production of polyurethane plastics by the isocyanate polyaddition process.

## Revendications

1. Procédé pour la préparation de dispersions de copolymères greffés faiblement visqueuses, exemptes d'agglomérats et stables, par polymérisation radicalaire de monomères à insaturation éthylénique à concurrence de 25 à 65 % en poids dans un polyol de base, caractérisé en ce qu'on effectue la polymérisation en présence d'un polyol contenant des groupes terminaux à insaturation éthylénique, d'un régulateur à faible poids moléculaire et, le cas échéant, d'un solvant organique, dans lequel
le polyol contenant des groupes terminaux à insaturation éthylénique présente une masse molaire de 4700 à 15000 g/mole, une fonctionnalité de 2 à 6 et de 0,1 à 1 mole de liaison double par mole de polyol, et est en outre caractérisé par le fait que les groupes à insaturation éthylénique ont été incorporés par réaction avec un isocyanate, l'isocyanate ayant été obtenu par mise en réaction d'acrylates monohydroxylés à bas poids moléculaire et à insaturation éthylénique avec des polyisocyanates,
et
à titre de polyol de base, on utilise un oxyde de polyalkylène présentant au moins 2 groupes hydroxyle, possédant une fonctionnalité de 2,5 à 6 et un indice OH de 20 à 100.

2. Procédé selon la revendication 1, caractérisé en ce qu'on utilise à titre de monomères à insaturation éthylénique, du styrène et/ou de l'acrylonitrile.

3. Procédé selon les revendications 1 et 2, caractérisé en ce qu'on utilise à titre de monomères à insaturation éthylénique, des mélanges de styrène et d'acrylonitrile dans le rapport pondéral de 20:80 à 80:20.

4. Procédé selon les revendications 1 et 2, caractérisé en ce qu'on utilise à titre de monomères à insaturation éthylénique, des mélanges de styrène et d'acrylonitrile dans le rapport pondéral de 70:30 à 30:70.

5. Procédé selon une ou plusieurs des revendications précédentes, caractérisé en ce qu'on utilise à titre de régulateur à faible poids moléculaire, du méthanol, de l'éthanol ou de l'isopropanol.

6. Dispersions de copolymères greffés faiblement visqueuses, exemptes d'agglomérats et stables, que l'on obtient conformément au procédé selon une ou plusieurs des revendications précédentes.

7. Utilisation des dispersions de copolymères greffés que l'on obtient conformément à une ou plusieurs des revendications précédentes, comme composant de polyol dans la préparation de matières synthétiques de polyuréthanne conformément au procédé de polyaddition d'isocyanate.
